# EUROPÄISCHE PATENTSCHRIFT

(11) **EP 2 403 724 B1**
(45) Veröffentlichungstag und Bekanntmachung des Hinweises auf die Patenterteilung: **26.12.2012**
(21) Anmeldenummer: 09749123.7
(22) Anmeldetag: 11.11.2009
(51) Int. Cl.: B60C 11/13

(54) **FAHRZEUGLUFTREIFEN**
PNEUMATIC VEHICLE TYRE
PNEUMATIQUE DE VÉHICULE

(30) Priorität: 04.03.2009 DE 102009003562
(43) Veröffentlichungstag der Anmeldung: 11.01.2012
(73) Patentinhaber: Continental Reifen Deutschland GmbH, 30165 Hannover (DE)
(72) Erfinder: ACKERMANN, Lutz, 38539 Mueden (DE); MILCHERS, Wolfgang, 31319 Sehnde (DE); FRIES, Volkmar, 31707 Bad Eilsen (DE)
(74) Vertreter: Finger, Karsten
(86) Internationale Anmeldenummer: PCT/EP2009/064953
(87) Internationale Veröffentlichungsnummer: WO 2010/099838

(56) Entgegenhaltungen:
- DE-A1- 3 619 149
- DE-A1-102007 026 653
- US-A- 4 865 099

## Beschreibung

Die Erfindung betrifft einen Fahrzeugluftreifen, insbesondere für Schwerlastfahrzeuge, mit einem Laufstreifen mit einer Anzahl von in Umfangsrichtung verlaufenden Umfangsnuten, welche Profilpositive, wie Blockreihen oder Profilrippen, voneinander trennen, wobei die Umfangsnuten jeweils von einem Nutgrund und zwei Nutflanken begrenzt sind.

Es ist bekannt, dass der Nutgrund von Umfangsnuten in Laufstreifen von Schwerlastfahrzeugen, insbesondere von Umfangsnuten, die den Schulterrippen oder Schulterblockreihen benachbart sind, unter höherer Belastung zum Einreißen neigt. Um die Gefahr von Rissbildungen zu reduzieren, ist es beispielsweise bekannt, die Gürtellagen zu verbreitern, was sich jedoch auf die Gürtelhaltbarkeit nachteilig auswirkt. Vorgeschlagen wurde ferner, am Rillengrund besondere Gummischichten einzubringen, die weniger zu einer Rissbildung neigen. Diese Maßnahme ist jedoch in der Serienproduktion von Reifen nur schwer einsetzbar.

Aus der DE 10 2007 026653 A1 ist ein Fahrzeugluftreifen mit einem Laufstreifen bekannt, in welchem zumindest eine Rille eingebracht ist, die einen den tiefsten Bereich der Rille bildenden Rillengrund aufweist, wobei zwischen dem Rillengrund und einem aus einer oder mehreren Gürtellagen bestehenden Gürtel des Fahrzeugreifens eine Unterprofilschicht vorhanden ist. Um eine gleichmäßige Unterprofilschicht unterhalb der Rillen der Lauffläche zur Verfügung zu stellen, sodass eine unerwünschte Verformung der Gürtellagen des Fahrzeugreifens vermieden werden kann, weist der Grund der Rillen eine ellipsen- oder keilförmige Querschnittsgeometrie auf. Der Laufstreifen des aus der US-A-4,865,099 bekannten Fahrzeugluftreifens weist mehrere in Umfangsrichtung umlaufende Rippen auf, welche voneinander durch in Zickzackform umlaufende Umfangsnuten getrennt sind. Die Tiefe der Umfangsnuten variiert in Umfangsrichtung derart, dass sie an den Umfangsnutflanken, welche jeweils in die Rippen hinein springende Ecken bilden, am geringsten ist. In den einzelnen Umfangsnutabschnitten ändert sich dadurch die Neigung des Nutgrundes in axialer Richtung. Diese Ausgestaltung der Umfangsnuten soll einem ungleichmäßigen Abrieb des Laufstreifens entgegenwirken. Die DE 36 19 149 A1 offenbart einen Fahrzeugreifen mit Profilrillen im Laufstreifen, deren Rillengrund auf besondere Weise gekrümmt ausgeführt ist, um die maximale Spannung zu verringern.

Gemäß der EP-B-1 619 049 soll eine besondere Geometrie der schulterseitig gelegenen Umfangsnuten eine Rissbildung am Nutgrund vermeiden. Diese Umfangsnuten sind im Querschnitt derart ausgeführt, dass das Zentrum des innersten Abschnittes des Nutgrundes näher an der Äquatorialebene des Laufstreifens positioniert ist als das durch die Rillenbreite definierte Zentrum. Zusätzlich werden die seitlichen Rillenflanken derart ausgeführt, dass der Winkel zwischen der Laufstreifenoberfläche und der Rillenflanke, welche sich an der Seite der Äquatorialebene befindet, gleich oder kleiner ist als der Winkel zwischen der Laufstreifenoberfläche und der gegenüberliegenden Nutflanke.

Der Erfindung liegt die Aufgabe zugrunde, bei einem Reifen der eingangs genannten Art das Entstehen von Einrissen am Nutgrund der Umfangsnuten, insbesondere am Nutgrund der schulterseitig verlaufenden Umfangsnuten, wirkungsvoll durch eine einfache Maßnahme, die keine besondere Ausgestaltung der Nutflanken erfordert, zu vermeiden.

Gelöst wird die gestellte Aufgabe erfindungsgemäß dadurch, dass der Nutgrund, im Querschnitt und in axialer Richtung betrachtet, unter einem Neigungswinkel von 3° bis 15° zu einer die Außenflächen der Profilpositive umfassenden Einhüllenden verläuft, derart, dass, bezogen auf die Laufstreifenmitte, die jeweils innere Nutflanke kürzer ist als die äußere Nutflanke.

Die erfindungsgemäße Maßnahme hat eine Abnahme der Belastung an jenem Bereich des Nutgrundes zur Folge, welcher, bezogen auf die radiale Richtung, der Laufstreifenoberfläche neigungsbedingt näher liegt. Die Verringerung der Belastung geht mit einer deutlichen Abnahme der Rissanfälligkeit in diesem Bereich des Nutgrundes der Umfangsnut einher. Nachdem der Nutgrund der Umfangsnuten in jeder Laufstreifenhälfte in Richtung zu den Reifenschultern abfällt, werden vor allem jene Nutgrundbereiche, welche laufstreifeninnenseitig gelegen sind und besonders rissanfällig sind, wirkungsvoll entlastet.

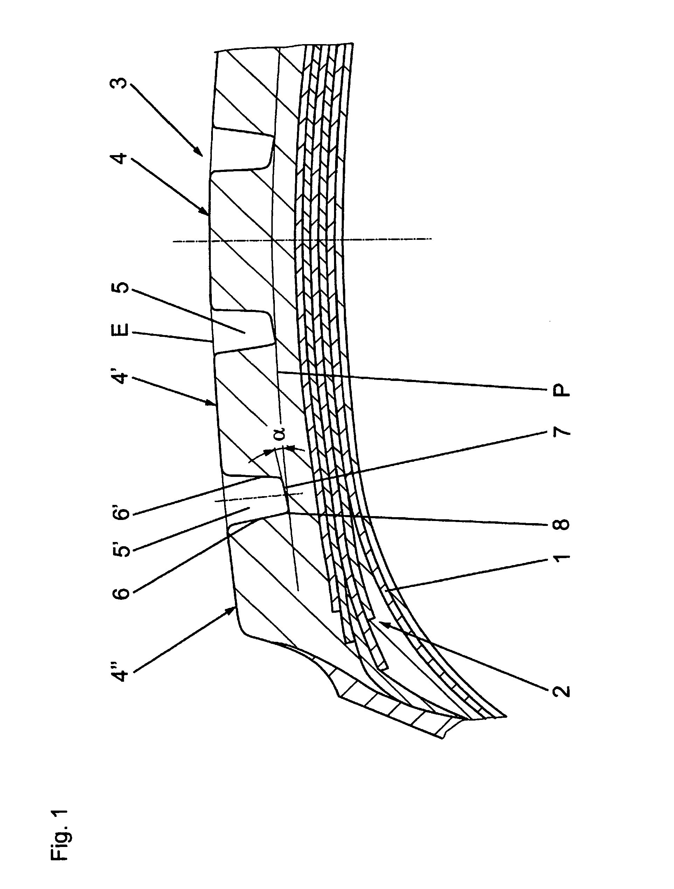

Weitere Merkmale, Vorteile und Einzelheiten der Erfindung werden nun anhand der schematischen Zeichnung, die ein Ausführungsbeispiel darstellt, näher beschrieben. Dabei zeigt die einzige Zeichnungsfigur, Fig. 1, einen Teilquerschnitt durch einen Fahrzeugluftreifen im Laufstreifenbereich mit einer Ausführungsform der Erfindung.

Fig. 1 zeigt einen Laufstreifen 3 eines LKW-Reifens mit den radial innerhalb des Laufstreifens befindlichen Bauteilen, einer Radialkarkasse 1 und einem Gürtelverband 2. Die Radialkarkasse 1 kann auf herkömmliche Weise ein- oder mehrlagig ausgeführt sein und als Festigkeitsträger Stahlkord beinhalten. Der Gürtelverband 2 weist vorzugsweise vier Gürtellagen auf, die ebenfalls auf herkömmliche Weise ausgeführt und angeordnet sein können. Der Laufstreifen 3 setzt sich aus fünf etwa gleich breiten und in Umfangsrichtung umlaufenden Profilrippen 4, 4' und 4" zusammen, wobei die Profilrippe 4 entlang des Reifenäquators verläuft und die Profilrippen 4" die Schulterrippen sind. Die Profilrippen 4, 4', 4" können zum Teil oder zur Gänze durch Profilblockreihen ersetzt sein. Breite, in Umfangsrichtung umlaufende Umfangsnuten 5, 5' trennen die Profilrippen 4, 4', 4" voneinander. Die Umfangsnuten 5, 5' können über den Reifenumfang zumindest im Wesentlichen gerade verlaufen, sie können jedoch auch einen zick-zack-förmigen oder zick-zack-ähnlichen Verlauf aufweisen.

Jede Umfangsnut 5, 5' ist von zwei Nutflanken 6, 6' und einem diese verbindenden Nutgrund 7 begrenzt. Bei zick-zack-förmig verlaufenden Umfangsnuten sind die Nutflanken 6, 6', in Draufsicht auf den Laufstreifen betrachtet, in Abschnitte gegliedert, welche gegenüber der Umfangsrichtung des Reifens geneigt sind. Bei der in der Zeichnungsfigur gezeigten prinzipiellen Ausführungsvariante sind die beiden Nutflanken 6, 6' gegenüber der radialen Richtung unter einem kleinen spitzen Winkel in der Größenordnung von 3° bis 15° geneigt, derart, dass die Nutbreite vom Nutgrund 7 zur Laufstreifenoberfläche größer wird. Die Nutflanken 6, 6' gehen über Übergangsbereiche 8, welche mit einem kleinen Radius in der Größenordnung von 1 mm bis 3 mm gerundet sind, in den Nutgrund 7 über. Der eben ausgeführte Nutgrund 7 ist derart in axialer Richtung geneigt, dass die axial innere Nutflanke 6' kürzer ist als die axial äußere Nutflanke 6. Wird zu einer die Außenflächen der Profilrippen 4, 4' und 4" umschließenden Einhüllenden E, die in der Figur strichliert angedeutet ist, in axialer Richtung eine parallele Linie P in den in radialer Richtung am weitesten innen gelegenen Punkt des Nutgrundes 7 gelegt, beträgt der Neigungswinkel α zwischen dem Nutgrund 7 und der Linie P zwischen 3° und 15°.

Bei der in der Figur gezeigten Ausführungsform ist in sämtlichen Umfangsnuten 5, 5' der Nutgrund 7 unter einem Winkel α geneigt, wobei die Neigung in jeder Laufstreifenhälfte jeweils derart ist, dass der Nutgrund 7 der Umfangsnuten 5, 5' zur Laufstreifenaußenseite abfällt. Die erfindungsgemäße Nutgrundneigung ist vor allem in der der Schulterrippe 4" benachbarten Umfangsnut 5' vorteilhaft, da der Nutgrund 7 dieser Umfangsnut 5' besonders anfällig hinsichtlich des Entstehens von Einrissen ist. Insbesondere ist jene Nutgrundecke, welche laufstreifeninnenseitig gelegen ist, besonders rissanfällig. Rechnerische Simulationen und in der Praxis durchgeführte Belastungsversuche haben ergeben, dass durch die Neigung des Nutgrundes 7, wie beschrieben, die Belastung am Nutgrund 7 deutlich vermindert wird und derart die Wahrscheinlichkeit des Entstehens von Einrissen merklich reduziert ist.

Das Ausmaß der Beanspruchung des Laufstreifens am Nutgrund von Umfangsnuten hängt unter anderem von der Reifengröße und von der sonstigen Gestaltung des Profils, vor allem auch von der Ausgestaltung der Nutflanken, insbesondere der Größe des Flankenwinkels, ab.

### Bezugszeichenliste

- 1 ........: Radialkarkasse
- 2 ........: Gürtelverbund
- 3 ........: Laufstreifen
- 4 ........: Profilrippen
- 4' .......: Profilrippen
- 4" ......: Profilrippen
- 5 ........: Umfangsnut
- 5' .......: Umfangsnut
- 6 ........: Nutflanke
- 6'.......: Nutflanke
- 7 ........: Nutgrund
- 8 ........: Übergangsrundung
- E ........: Einhüllende
- P ........: Linie

## Patentansprüche

1. Fahrzeugluftreifen, insbesondere für Schwerlastfahrzeuge, mit einem Laufstreifen (3) mit einer Anzahl von in Umfangsrichtung verlaufenden Umfangsnuten (5, 5'), welche Profilpositive (4, 4', 4"), wie Blockreihen oder Profilrippen, voneinander trennen, wobei die Umfangsnuten (5, 5') jeweils von einem Nutgrund (7) und zwei Nutflanken (6, 6') begrenzt sind,
**dadurch gekennzeichnet,**
**dass** der Nutgrund (7), im Querschnitt und in axialer Richtung betrachtet, unter einem Neigungswinkel (α) von 3° bis 15° zu einer die Außenflächen der Profilpositive umfassenden Einhüllenden (E) verläuft, derart, dass, bezogen auf die Laufstreifenmitte, die jeweils innere Nutflanke (6') kürzer ist als die äußere Nutflanke (6).

## Claims

1. Pneumatic vehicle tire, in particular for heavy trucks, comprising a tread rubber (3) with a number of circumferential grooves (5, 5') running in the circumferential direction, which separate profile positives (4, 4', 4"), such as rows of blocks or profile ribs, from one another, the circumferential grooves (5, 5') respectively being bounded by a groove base (7) and two groove flanks (6, 6'), **characterized in that** the groove base (7), when considered in cross section and in the axial direction, runs at an angle of inclination (α) of 3° to 15° in relation to an envelope (E) encompassing the outer surfaces of the profile positives in such a way that, in relation to the tread rubber centre, the inner groove flank (6') in each case is shorter than the outer groove flank (6).

## Revendications

1. Pneumatique de véhicule, en particulier pour véhicules lourds, comprenant une bande de roulement (3) avec une pluralité de rainures périphériques (5,5') s'étendant dans la direction périphérique, lesquelles séparent les unes des autres des marques positives profilées (4, 4', 4"), telles que des rangées de blocs ou des nervures profilées, les rainures périphériques (5, 5') étant à chaque fois limitées par une base de rainure (7) et par deux flancs de rainure (6,6 '), **caractérisé en ce que**
la base de rainure (7), considérée en coupe transversale et dans la direction axiale, s'étend suivant un angle d'inclinaison (α) de 3° à 15° par rapport à un plan d'enveloppement (E) comprenant les surfaces extérieures des marques positives profilées, de telle sorte que le flanc de rainure interne respectif (6'), par rapport au milieu de la bande de roulement, soit plus court que le flanc de rainure extérieur (6).
